# EUROPÄISCHE PATENTSCHRIFT

(11) **EP 1 479 282 B1**
(45) Veröffentlichungstag und Bekanntmachung des Hinweises auf die Patenterteilung: **23.08.2006**
(21) Anmeldenummer: 04101785.6
(22) Anmeldetag: 28.04.2004
(51) Int. Cl.: A01F 12/40, B02C 18/18, B21D 53/64

(54) **Häckselmesser für einen Strohhäcksler**
Cutting blade for a straw chopper
Couteau hache-paille

(30) Priorität: 17.05.2003 DE 10322337; 17.07.2003 DE 10332363
(43) Veröffentlichungstag der Anmeldung: 24.11.2004
(73) Patentinhaber: DEERE & COMPANY, Moline, Illinois 61265-8098 (US)
(72) Erfinder: Priesnitz, Rico, 66822, Lebach (DE); Veit, Peter, 66484, Battweiler (DE)
(74) Vertreter: Holst, Sönke

(56) Entgegenhaltungen:
- EP-A- 0 479 329
- EP-A- 1 295 524
- WO-A-91/10351
- DE-A- 3 626 456
- DE-A- 3 631 485
- DE-A- 3 823 116
- US-A- 3 581 604

## Beschreibung

Die Erfindung betrifft ein Häckselmesser für einen Strohhäcksler, das zwei Seitenflächen und an beiden Enden der Seitenflächen angeordnete Schneiden aufweist, die durch jeweils zwei gegenüber den Seitenflächen im Winkel angeordnete Flächen gebildet werden, wobei die Flächen jeder Schneide unsymmetrisch sind.

In der EP 0 277 129 B ist ein Strohhäcksler beschrieben, der ein Gehäuse mit Gegenmessern und einen darin drehbaren Rotor umfasst. An dem Rotor sind Häckselmesser paarweise pendelnd gelagert, die an den vorlaufenden Flächen mit einer abgeschrägten, eine scharfe Kante bildenden Oberfläche versehen sind. Um die Verteilrichtung und die Ausbreitungsweite des gehäckselten Strohs zu kontrollieren, sind die abgeschrägten Oberflächen der paarweise aufgehängten Häckselmesser in einer alternierenden Konfiguration angeordnet, so dass die abgeschrägten Oberflächen zueinander hin oder voneinander ab gewandt sind. Die Häckselmesser weisen somit einen trapez- oder rautenförmigen Querschnitt auf.

Diese Geometrie führt beim Schnittvorgang zur Entstehung von Biegemomenten im Häckselmesser, die zu Schwingungen führen, welche wiederum die Lebensdauer durch Ermüdungsbrüche verkürzen.

Die DE 36 26 456 A schlägt einen Strohhäcksler vor, bei dem die Messer ebenfalls paarweise pendelnd an einem Rotor angebracht sind. Die vorlaufenden Kanten der Häckselmesser sind einseitig angeschliffen, um das gehäckselte Stroh in die gewünschte Richtung abzulenken. Um zu erreichen, dass das Stroh im mittleren Bereich der Häckseltrommel nach hinten und nicht nach außen ausgeworfen wird, sind dort beidseitig angeschliffene Häckselmesser angeordnet. Außerdem kann der Anschliff der Häckselmesser von den Seiten des Rotors zur Mitte kontinuierlich von einem einseitigen auf einen doppelseitigen Anschliff übergehen. In einer Ausführungsform ist die äußere Stirnkante des Häckselmessers mit einem konvexen Radius versehen. Die Häckselmesser weisen jeweils an der vorlaufenden und an der nachlaufenden Kante Schneiden auf. Um zu erreichen, dass die Ausrichtung der Schneiden gleich bleibt, wenn sie im Verschleißfall umgedreht werden, so dass auch die Auswurfrichtung konstant bleibt, sind die Querschnittsflächen der Häckselmesser punktsymmetrisch zur Längsachse angeordnet. Bei den unsymmetrischen, doppelseitig angeschliffenen Messern ist daher der kürzere vorlaufende Anschliff auf der jeweils anderen Seitenfläche des Häckselmessers angeordnet als der kürzere nachlaufende Anschliff des Häckselmessers.

Bei dieser Geometrie entstehen aerodynamisch bedingt ebenfalls Biegemomente in den Häckselmessern, welche zu Schwingungen führen, die die Lebensdauer der Häckselmesser verkürzen. Außerdem hat die Anordnung mit einer kontinuierlichen Variation des Anschliffs der Häckselmesser den Nachteil, dass eine hohe Anzahl unterschiedlicher Häckselmesser erforderlich ist, was sich als produktions-, versand- und lagertechnisch nachteilig erweist.

Die DE 36 31 485 A beschreibt einen Strohhäcksler mit Häckselmessern, deren Geometrie mit den Häckselmessern aus DE 36 26 456 A übereinstimmt. Der Anschliff an den Schneidkanten besteht jedoch aus einer Reihe angeschliffener Zähne.

Die der Erfindung zu Grunde liegende Aufgabe wird darin gesehen, ein Häckselmesser für einen Strohhäcksler bereitzustellen, das sich durch eine vorteilhafte Aerodynamik und hohe Lebensdauer auszeichnet.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Das Häckselmesser ist mit zwei unsymmetrischen und somit unterschiedlichen Schneiden versehen, die jeweils durch zwei zur benachbarten Seitenfläche im Winkel angeordnete, in der Regel angeschliffene Flächen gebildet werden. Es wird vorgeschlagen, den Querschnitt des Häckselmessers im Bereich der Schneiden spiegelsymmetrisch zu seiner Mittelebene zu gestalten. Die in der Bewegungsrichtung des Häckselmessers vorlaufende Schneide ist somit symmetrisch zur nachlaufenden Schneide geformt.

Die unsymmetrischen, jeweils durch zwei angeschliffene Flächen gebildeten Schneiden bilden gemeinsam mit den Seitenflächen eine Art Tragflächenprofil, das auf einer Seitenfläche des Häckselmessers einen Unterdruck und auf der anderen Seitenfläche einen Überdruck erzeugt. Durch die zur Mittelebene des Häckselmessers symmetrische Anordnung der Schneiden erreicht man, dass die an der vorlaufenden Schneide wirkenden aerodynamischen Kräfte etwa gleich denen an der nachlaufenden Schneide sind. Daher entsteht über die Länge der Seitenflächen ein etwa konstanter Druck, so dass unerwünschte Torsions- oder Biegemomente im Häckselmesser vermieden werden. Außerdem wird eine höhere Luftströmungsgeschwindigkeit erzeugt, die zur besseren Breitenverteilung des Strohs genutzt werden kann.

Die Asymmetrie der beiden angeschliffenen Flächen einer Schneide ermöglicht, dass die Spitzen der Schneiden im Abstand von der Mittelebene des Häckselmessers angeordnet werden können, was die aerodynamische Wirkung der Schneiden verbessert. Die Spitzen der Schneiden könnten aber auch auf der Mittelebene des Häckselmessers liegen, wobei die angeschliffenen Flächen unterschiedlich geformt sind, um die Wirkung des Tragflächenprofils zu erzielen. Da zwei angeschliffene Flächen vorhanden sind, sind die Spitzen auch im Abstand von den Seitenflächen angeordnet, was die beim Auftreffen auf Häckselgut auftretenden Biegemomente reduziert.

Die Winkel zwischen den Seitenflächen und den angeschliffenen Flächen sind grundsätzlich beliebig. Als vorteilhaft hat sich die Verwendung jeweils gleicher Winkel erwiesen. Es wäre jedoch auch eine Verwendung unterschiedlicher Winkel an den beiden, eine Schneide bildenden Flächen denkbar. Aufgrund der genannten Spiegelsymmetrie sind jedoch die Winkel zwischen den Seitenflächen und den benachbarten angeschliffenen Flächen an der vor- und nachlaufenden Schneide gleich.

Um an der äußeren Stirnseite der Häckselmesser den Reibwiderstand während des Häckselbetriebs zu erhöhen, wird vorgeschlagen, die äußere Stirnseite in der durch die Seitenflächen definierten Ebene mit einem Radius zu versehen. Durch diese Maßnahme wird auch die Lebensdauer des Häckselmessers erhöht, da der induzierte Luftwiderstand durch Vermeidung von scharfen Kanten reduziert wird. Auch wird eine bessere Breitenverteilung des Strohs erzielt, da eine größere projizierte Stirnfläche im Bereich der größten Umfangsgeschwindigkeit gebildet wird. Der Radius stimmt vorzugsweise zumindest näherungsweise mit dem Innenradius des den Rotor des Strohhäckslers aufnehmenden Gehäuses überein.

Radien an den Spitzen der Schneiden erweisen sich als vorteilhaft, da sie ein vorzeitiges Abreißen der Luftströmung vermeiden. Dadurch wird die Luftströmung des Strohhäckslers verbessert und die Lebensdauer der Häckselmesser erhöht, weil die geometrische Kerbwirkung reduziert wird.

In einer bevorzugten Ausführungsform sind die Schneiden mit Kerben ausgestattet. Bevorzugt ist eine Einbringung des Verzahnungsschliffs in Richtung der jeweils längeren angeschliffenen Fläche jeder Schneide. Dann befindet sich die geometrische Kerbe im Bereich der neutralen Biegefaser des Häckselmessers, so dass durch Biegespannungen bewirkte Spannungsspitzen im Kerbgrund reduziert werden. Die Dauerfestigkeit des Häckselmessers wird dadurch gesteigert. In einer anderen Ausführungsform, die sich in Tests bewährt hat, sind die Verzahnungsschliffe in Richtung der jeweils kürzeren angeschliffenen Fläche jeder Schneide angebracht.

Die erfindungsgemäßen Häckselmesser eignen sich insbesondere für die Verwendung in an sich bekannten Strohhäckslern, die mit einem Gehäuse und einem darin antreibbar gelagerten Rotor mit einer sich quer zur Fahrtrichtung des Mähdreschers verlaufenden Drehachse ausgestattet sind. Vorzugsweise sind alle Häckselmesser eines Stohhäckslers mit dem beschriebenen Querschnitt versehen.

Die Häckselmesser (vorzugsweise alle Häckselmesser eines Rotors) sind in der Regel paarweise pendelnd an geeigneten Halterungen des Rotors befestigt. Dabei bietet es sich an, die Seiten der Häckselmesser mit den jeweils längeren angeschliffenen Flächen aneinander zugewandt anzubringen. Die aerodynamische Wirkung der angeschliffenen Flächen bewirkt, dass an den aneinander zugewandten Flächen der Häckselmesser ein Unterdruck entsteht, während sich an den Außenseiten ein Überdruck bildet. Die Häckselmesser stabilisieren sich somit gegenseitig.

In den Zeichnungen sind zwei nachfolgend näher beschriebene Ausführungsbeispiele der Erfindung dargestellt. Es zeigt:
- Fig. 1: eine schematische Seitenansicht eines Mähdreschers mit einem Strohhäcksler,
- Fig. 2: eine seitliche Ansicht des Rotors des Strohhäckslers mit einem daran pendelnd aufgehängten Paar von Häckselmessern,
- Fig. 3: einen Querschnitt durch die Häckselmesser entlang der Linie 3-3 der Figur 2,
- Fig. 4: eine perspektivische Ansicht eines Häckselmessers,
- Fig. 5: eine vergrößerte perspektivische Ansicht einer Schneidkante des Häckselmessers, und
- Fig. 6: eine vergrößerte perspektivische Ansicht der gegenüberliegenden Schneidkante des Häckselmessers.

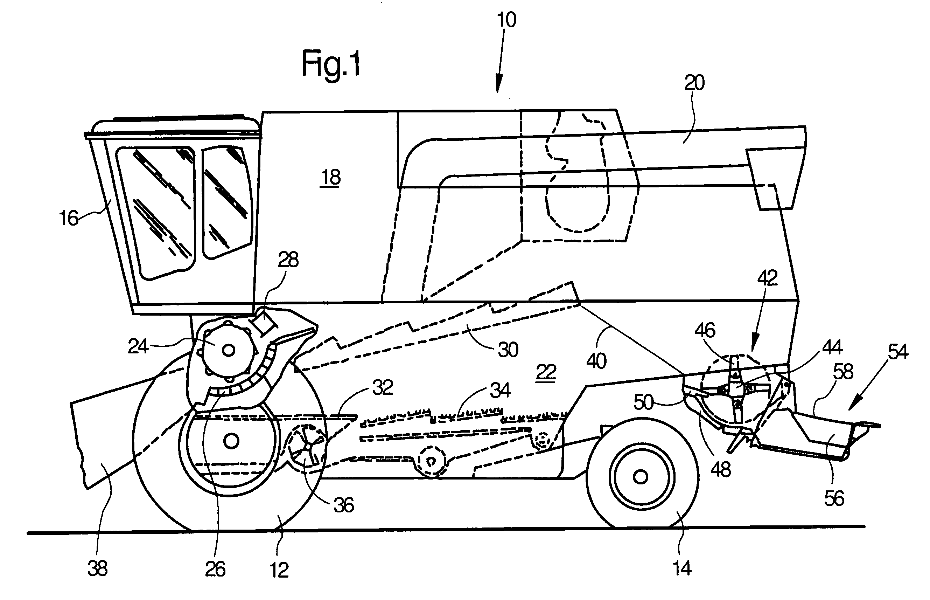

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Ernte gutteile über die Schüttler 30 über ein Strohleitblech 40 einem Strohhäcksler 42 zugeführt werden und leichte Bestandteile mittels eines Gebläses 36 von den Sieben 34 - ggf. über zusätzliche Kaffstreuer oder durch den Strohhäcksler 42 - ebenfalls auf den Boden geblasen werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist.

Der Strohhäcksler 42 umfasst einen hohlzylindrischen Rotor 44 mit um seinen Umfang und über seine Länge verteilten, pendelnd aufgehängten Häckselmessern 46, der mit einem Antrieb derart verbunden ist, dass er in einem Gehäuse 48 um eine etwa horizontale, quer zur Fahrtrichtung verlaufende Achse rotiert. Im Zusammenwirken mit Gegenmessern 50 werden die ausgedroschenen, großen Erntegutteile zu Häckselgut zerkleinert. An der Rückseite des Strohhäckslers 42 ist eine Verteileinrichtung 54 angeordnet, die eine Anzahl seitlich nebeneinander angeordneter Leiteinrichtungen 56 in Form von Strohleitblechen umfasst, welche unterhalb einer Strohverteilerhaube 58 angeordnet sind.

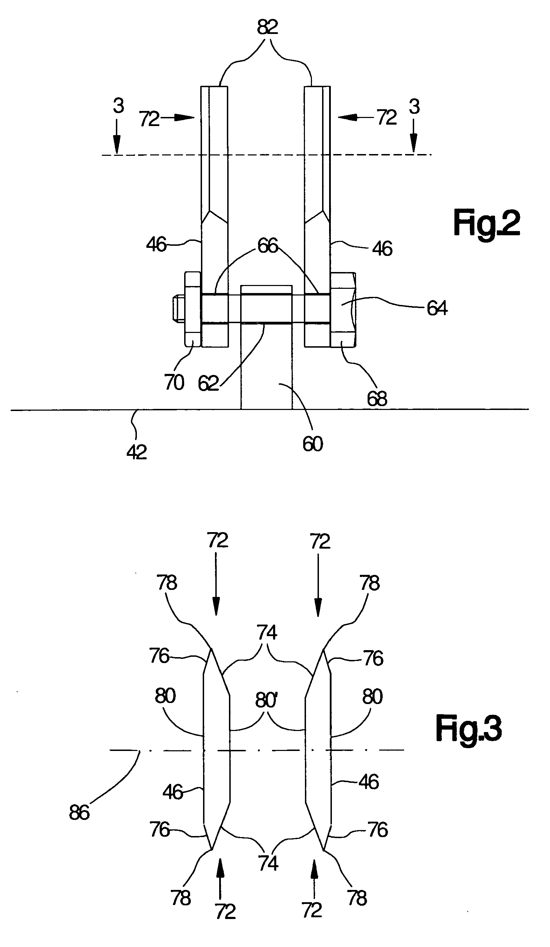

Anhand der Figur 2 ist erkennbar, dass die Häckselmesser 46 paarweise pendelnd an Halterungen 60 gelagert sind, die am Rotor 44 befestigt sind. Die Halterungen 60 weisen sich in Achsrichtung des Rotors 44 erstreckende Bohrungen 62 auf, durch die sich jeweils ein Bolzen 64 erstreckt. Der Bolzen 64 erstreckt sich auch durch endseitig in den Häckselmessern 46 eingebrachte Löcher 66 und ist an seinem einem Kopf 68 gegenüberliegenden Ende durch eine Mutter 70 fixiert. Die Durchmesser der Bohrung 62 und der Löcher 66 ist derart gewählt, dass die Häckselmesser 46 frei pendeln können.

Die Häckselmesser 46 sind an ihren in der Drehrichtung des Rotors 44 vor- und nachlaufenden Stirnflächen in den dem Rotor 44 abgewandten Bereichen mit Schneiden 72 versehen, die sich etwa über 60 % der Länge der Häckselmesser 46 erstrecken.

Die Geometrie der Schneiden 72 ist in der Figur 3, die einen Querschnitt durch die Häckselmesser 46 entlang der Linie 3-3 der Figur 2 zeigt, detaillierter dargestellt. Die Häckselmesser 46 sind in der Drehrichtung des Rotors 44 betrachtet wesentlich länger als in der Achsrichtung des Rotors 44. Die Schneiden 72 weisen jeweils eine nach innen, dem benachbarten Häckselmesser 46 zugewandte, angeschliffene Fläche 74 und eine nach außen gewandte, angeschliffene Fläche 76 auf.

Alle inneren angeschliffenen Flächen 74 sind gleich lang und schließen jeweils denselben Winkel mit der benachbarten Seitenfläche 80' des Häckselmessers 46 ein. Analog sind alle äußeren angeschliffenen Flächen 76 gleich lang und schließen jeweils denselben Winkel mit der benachbarten Seitenfläche 80 des Häckselmessers 46 ein. Die Winkel zwischen den äußeren Flächen 76 und der benachbarten Seitenfläche 80 stimmen zumindest näherungsweise mit den Winkeln zwischen den inneren Flächen 74 und den ihnen benachbarten Seitenflächen 80' überein. Ein geeigneter Wert für diesen Winkel ist etwa 14°.

Die Spitzen 78 der Schneiden 72 liegen im Ergebnis nicht mittig zwischen den Seitenflächen 80, sondern sind demgegenüber nach außen verschoben. Auch sind die äußeren Seitenflächen 80 länger als die inneren Seitenflächen 80'. Die Querschnitte der Häckselmesser 46 sind zu ihrer (durch die die Mitten der Seitenflächen 80, 80' schneidenden) Mittelebene 86 spiegelsymmetrisch. Sollen die Häckselmesser 46 nach einer gewissen Betriebszeit gedreht werden, um die jeweils anderen Schneiden 72 in Kontakt mit dem Häckselgut zu bringen, werden die Bolzen 64 abgenommen, die Häckselmesser 46 jeweils paarweise ausgetauscht und dann werden die Bolzen 64 wieder fixiert. Die jeweils anderen Schneiden 72 kommen dann an die Stellen, an denen die abgenutzten Schneiden 72 sich befanden. Um eine Verwechslung zu vermeiden, können geeignete Markierungen am Rotor 44 und/oder den Häckselmessern 46 angebracht werden.

Beim Betrieb bewirkt die unsymmetrische Anordnung der Schneiden 72 eine Aerodynamik, die etwa der eines Tragflügels entspricht. Auf der Innenseite zwischen den Häckselmessern 46 entsteht ein Unterdruck, während auf den Außenseiten der Häckselmesser 46 ein Überdruck entsteht. Die beiden Häckselmesser ziehen sich somit in einem gewissen Maß an. Die Spiegelsymmetrie der Häckselmesser vermeidet eine Entstehung von die Lebensdauer nachteilig beeinflussenden, durch die Aerodynamik entstehenden Verwindungen im Häckselmesser 46. Außerdem wird im Strohhäcksler 42 eine im Vergleich zum Stand der Technik höhere Luftströmungsgeschwindigkeit erzeugt, welche zur besseren Breitenverteilung des Strohs genutzt werden kann. Durch die etwa mittige Anordnung der Spitzen 78 der Schneiden 72 ist sichergestellt, dass die Häckselmesser beim Auftreffen auf Häckselgut in sich nur geringförmig gebogen werden, was unerwünschte Biegebeanspruchungen vermeidet.

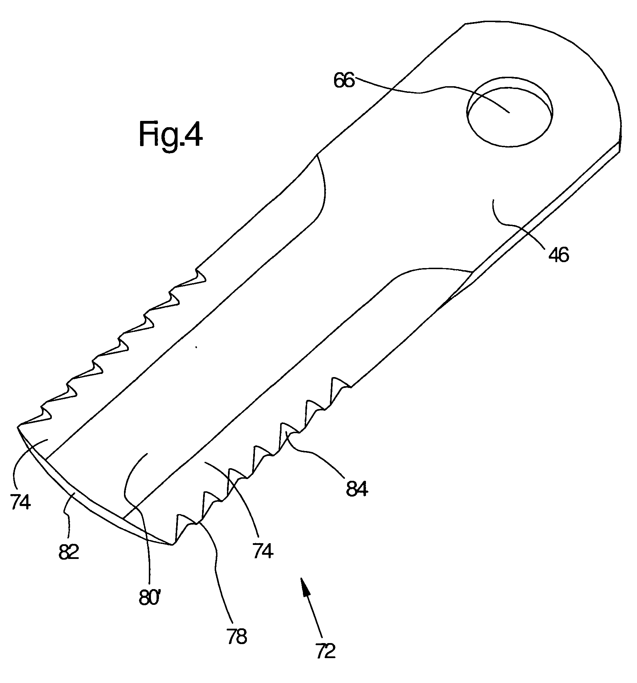

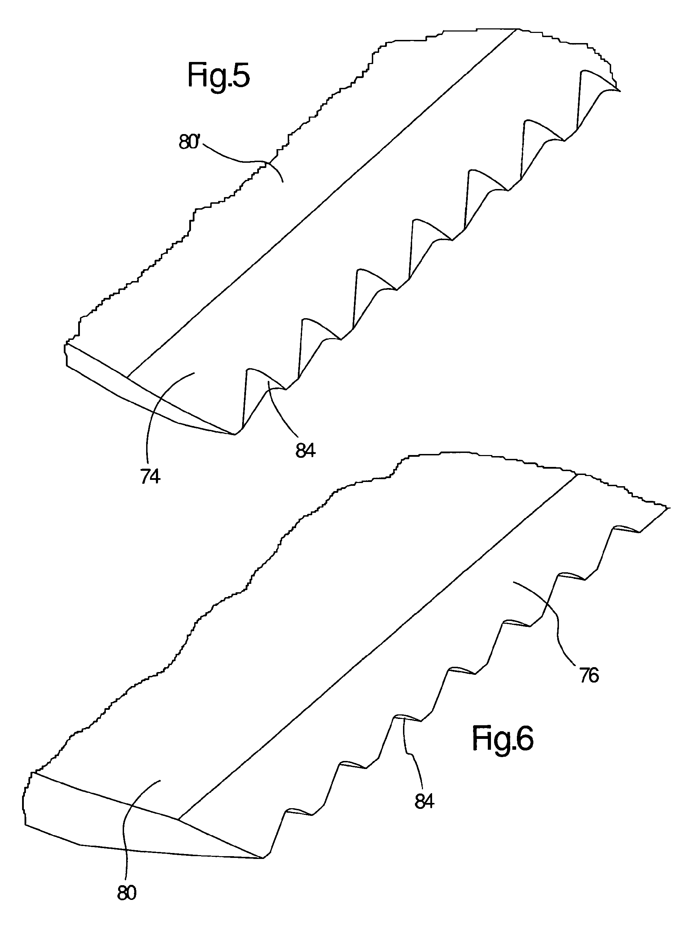

In den Figuren 4 bis 6 sind in die Schneiden 72 eingebrachte Kerben 84 erkennbar. Der Verzahnungsschliff zur Bildung der Kerben 84 ist in Richtung der längeren Fläche 74 eingebracht. Zur Bildung der Kerben 84 wird nur aus den inneren, längeren angeschliffenen Flächen 74 der Schneiden 72 Material entfernt, so dass diese Flächen 74 auch im Abstand von der Spitze 78 mit den Kerben 84 zugehörigen Vertiefungen versehen sind, während die äußeren Flächen 76 in sich plan sind und nur ihre äußere Kante dem Verlauf der Kerben 84 folgt. Dadurch erreicht man, dass sich die geometrische Kerbe im Bereich der neutralen Biegefaser des Häckselmessers 46 befindet. Spannungsspitzen im Kerbgrund aufgrund von Biegespannungen sind reduziert und die Dauerfestigkeit des Häckselmessers 46 ist vergrößert. Durch die Wahl eines relativ großen Radius des Grunds der Kerben 84 wird die Kerbwirkung erheblich reduziert.

Die äußere Stirnseite 82 der Häckselmesser 46 ist in der Häckselmesserebene mit einem Radius versehen. Aufgrund der sich dabei bildenden größeren projizierten Stirnfläche im Bereich der größten Umfangsgeschwindigkeit wird der Reibwiderstand während des Häckselbetriebs erhöht und der Materialfluss und die Strömungsgeschwindigkeit verbessert. Weiterhin wird die Luftströmung des Strohhäckslers 42 und somit die Breitenverteilung des Strohs verbessert, weil der induzierte Luftwiderstand vermindert ist. Außerdem sind Radien an den Schleifkanten der Schneiden 72 angebracht, durch die ein frühzeitiges Abreißen der Luftströmung vermieden wird.

Die Härte der Häckselmesser 46 kann im Bereich der Schneide 72 eine Bandbreite von 55-58 HRC und im Kern eine Bandbreite von 37-40 HRC aufweisen. Dieser Härteverlauf sollte harmonisch verlaufen, um metallurgische Kerben zu vermeiden. Durch diesen Härteverlauf wird weiterhin das Zusammentreffen von geometrischen Kerben im Bereich der Messerverzahnung und metallurgischer Kerbe durch abfallende Härte vermieden. Ein möglichst homogenes Gefüge des Materials des Häckselmessers kann durch ein Vergütungsverfahren gebildet werden, um metallurgische Kerben zu vermeiden. Der Kohlenstoff sollte also nicht nadelartig eingelagert sein.

## Patentansprüche

1. Häckselmesser (46) für einen Strohhäcksler (42), das zwei Seitenflächen (80, 80') und an beiden Enden der Seitenflächen (80, 80') angeordnete Schneiden (72) aufweist, die durch jeweils zwei gegenüber den Seitenflächen (80, 80') im Winkel angeordnete Flächen (74, 76) gebildet werden, wobei, der Querschnitt des Häckselmessers (46) im Bereich der Schneiden (72) spiegel-symmetrisch zur die Mitten der Seitenflächen (80,80') schneidenden Mittelebene (86) des Häckselmessers (46) ist, **dadurch gekennzeichnet, dass** die Flächen (74, 76) jeder Schneide (72) unsymmetrisch sind.

2. Häckselmesser (46) nach Anspruch 1, **dadurch gekennzeichnet, dass** die Spitzen (78) der Schneiden (72) im Abstand von der Mittelebene (86) des Häckselmessers (46) angeordnet sind.

3. Häckselmesser (46) nach Anspruch 1 oder 2, **dadurch gekennzeichnet, dass** die Winkel zwischen den Flächen (74, 76) und den Seitenflächen (80, 80') jeweils gleich sind.

4. Häckselmesser (46) für einen Strohhäcksler (42) nach einem der Ansprüche 1 bis 3, **dadurch gekennzeichnet, dass** die äußere Stirnseite (82) in der durch die Seitenflächen (80, 80') definierten Ebene mit einem Radius versehen ist.

5. Häckselmesser (46) nach einem der Ansprüche 1 bis 4, **dadurch gekennzeichnet, dass** an den Spitzen (78) der Schneiden (72) Radien vorgesehen sind.

6. Häckselmesser (46) nach einem der Ansprüche 1 bis 5, **dadurch gekennzeichnet, dass** Schneiden (72) mit Kerben (84) ausgestattet sind.

7. Häckselmesser (46) nach Anspruch 6, **dadurch gekennzeichnet, dass** der Verzahnungsschliff zur Bildung der Kerben (84) in Richtung der jeweils längeren oder kürzeren Fläche (74) eingebracht ist.

8. Strohhäcksler (42) mit einem Gehäuse (48) und einem darin antreibbar und drehbar angeordneten Rotor (44), an dem Häckselmesser (46) nach einem der vorhergehenden Ansprüche angebracht sind.

9. Strohhäcksler (42) nach Anspruch 8, **dadurch gekennzeichnet, dass** alle Häckselmesser (46) nach einem der Ansprüche 1 bis 7 ausgebildet sind.

10. Strohhäcksler (42) nach Anspruch 8 oder 9, **dadurch gekennzeichnet, dass** jeweils zwei Häckselmesser (46) paarweise pendelnd am Rotor (44) befestigt sind.

11. Strohhäcksler (42) nach Anspruch 10, **dadurch gekennzeichnet, dass** die längeren Flächen (74) der Häckselmesserpaare einander zugewandt sind.

## Claims

1. A chopper blade (46) for a straw chopper (42), which has two side faces (80, 80') and cutting edges (72) which are disposed at the two ends of the side faces (80, 80') and are formed by two surfaces (74, 76) arranged at an angle to the side faces (80, 80'), wherein the cross-section of the chopper blade (46) in the region of the cutting edges (72) has mirror symmetry about the central plane (86) of the chopper blade (46) intersecting the middle of the side faces (80, 80'), **characterized in that** the surfaces (74, 76) of each cutting edge (72) are asymmetrical.

2. A chopper blade (46) according to claim 1, **characterized in that** the tips (78) of the cutting edges (72) are spaced from the central plane (86) of the chopper blade (46).

3. A chopper blade (46) according to claim 1 or 2, **characterized in that** the angles between the surfaces (74, 76) and the side faces (80, 80') are equal.

4. A chopper blade (46) for a straw chopper (42) according to any of claims 1 to 3, **characterized in that** the outer end (82) in the plane defined by the side faces (80, 80') is radiused.

5. A chopper blade (46) according to any of claims 1 to 4, **characterized in that** radii are provided on the tips (78) of the cutting edges (72).

6. A chopper blade (46) according to any of claims 1 to 5, **characterized in that** cutting edges (72) are provided with notches (84).

7. A chopper blade (46) according to claim 6, **characterized in that** the tooth grinding for forming the notches (84) is applied in the direction of the respective longer or shorter face (74).

8. A straw chopper (42) with a housing (48) and a rotor (44) arranged to be driven rotatably therein and on which chopper blades (46) according to any of the preceding claims are fitted.

9. A straw chopper (42) according to claim 8, **characterized in that** all chopper blades (46) are formed in accordance with one of claims 1 to 7.

10. A straw chopper (42) according to claim 8 or 9, **characterized in that** two chopper blades (46) are mounted pivotally in each case in paired manner on the rotor (44).

11. A straw chopper (42) according to claim 10, **characterized in that** the longer faces (74) of the chopper blade pairs face one another.

## Revendications

1. Lame de hachage (46) pour un hache-paille (42), laquelle comporte deux faces latérales (80, 80') et des tranchants (72), qui sont situés sur les deux extrémités des faces latérales (80, 80') et qui sont formés chacun par deux surfaces (74, 76) agencées en angle par rapport aux faces latérales (80, 80'), la section de la lame de hachage (46) étant symétrique dans la zone des tranchants (72) au plan médian (86) de la lame de hachage (46) coupant le milieu des faces latérales (80, 80'), **caractérisée en ce que** les surfaces (74, 76) de chaque tranchant (72) sont asymétriques.

2. Lame de hachage (46) selon la revendication 1, **caractérisée en ce que** les pointes (78) des tranchants (72) sont agencées à distance du plan médian (86) de la lame de hachage (46).

3. Lame de hachage (46) selon la revendication 1 ou 2, **caractérisée en ce que** les angles formés entre les surfaces (74, 76) et les faces latérales (80, 80') sont égaux.

4. Lame de hachage (46) pour un hache-paille (42) selon l'une quelconque des revendications 1 à 3, **caractérisée en ce que** la face frontale extérieure (82), dans le plan défini par les faces latérales (80, 80'), présente une courbure.

5. Lame de hachage (46) selon l'une quelconque des revendications 1 à 4, **caractérisée en ce que** des courbures sont prévues au niveau des pointes (78) des tranchants (72).

6. Lame de hachage (46) selon l'une quelconque des revendications 1 à 5, **caractérisée en ce que** les tranchants (72) sont munis d'encoches (84).

7. Lame de hachage (46) selon la revendication 6, **caractérisée en ce que** la coupe de la denture pour la formation des encoches (84) est effectuée vers la surface (74) respectivement la plus longue ou la plus courte.

8. Hache-paille (42) comportant un carter (48) et un rotor (44), qui est destiné à être entraîné dans ce dernier et est monté rotatif et sur lequel sont montées des lames de hachage (46) selon l'une quelconque des revendications précédentes.

9. Hache-paille (42) selon la revendication 8, **caractérisé en ce que** toutes les lames de hachage (46) sont réalisées selon l'une quelconque des revendications 1 à 7.

10. Hache-paille (42) selon la revendication 8 ou 9, **caractérisé en ce que** respectivement deux lames de hachage (46) sont fixées par paires de manière oscillante contre le rotor (44).

11. Hache-paille (42) selon la revendication 10, **caractérisé en ce que** les surfaces plus longues (74) des paires de lames de hachage sont orientées l'une vers l'autre.
